# EUROPÄISCHE PATENTSCHRIFT

(11) **EP 0 765 020 B1**
(45) Veröffentlichungstag und Bekanntmachung des Hinweises auf die Patenterteilung: **08.12.1999**
(21) Anmeldenummer: 96114521.6
(22) Anmeldetag: 11.09.1996
(51) Int. Cl.: H02G 15/18

(54) **Anordnung zum dichten Umschliessen eines Substrates**
Device for sealingly enclosing a substrate
Dispositif pour enfermer un substrat de façon étanche

(30) Priorität: 21.09.1995 DE 29515112 U
(43) Veröffentlichungstag der Anmeldung: 26.03.1997
(73) Patentinhaber: ALCATEL, 75008 Paris (FR)
(72) Erfinder: Stieb, Werner, Dipl.-Ing., 31655 Stadthagen (DE)
(74) Vertreter: Döring, Roger, Dipl.-Ing.

(56) Entgegenhaltungen:
- EP-A- 0 223 424

## Beschreibung

Die Erfindung betrifft eine Anordnung zum dichten Umschließen eines Substrates nach dem Oberbegriff des Anspruches 1.

Für die Umhüllung von z. B. Kabelspleißen, Rohrverbindungen etc. werden wärmeschrumpfbare Manschetten verwendet, welche an ihren Längsrändern Verdickungen aufweisen, über welche nach dem Herumlegen der Manschette um das zu umhüllende Substrat eine Metallschiene geschoben wird, deren Querschnitt im wesentlichen C-förmig ist. Der offene Spalt der C-Schiene ist so bemessen, daß die verdickten Randbereiche beim Wärmeschrumpfen nicht aus der Schiene herausgezogen werden können. Auf diese Weise gelingt es aus einem Band eine rohrförmige Umhüllung herzustellen.

Bei sehr langen Umhüllungen bereitet das Aufschieben einer Schiene wegen der hohen Reibungskräfte erhebliche Probleme insbesondere auch deshalb, weil während des Transportes aber auch beim Aufschieben die Schiene verbogen werden kann.

Es ist deshalb bereits vorgeschlagen worden, zwei Schienen von entgegengesetzten Enden der Umhüllung auf die Verdickungen aufzuschieben. Dies kann jedoch beim Wärmeschrumpfen im Bereich der Stoßstellen der Schienen zu Problemen führen.

Aus der EP 0 223 424 ist es bekannt, zunächst auf die verdickten Randbereiche in etwa in der Mitte der Umhüllung einen Klemmbügel anzuordnen, der entweder von einem Ende der Umhüllung auf die Verdickungen aufgeschoben oder von oben über die Verdickungen geclipt wird. Anschließend werden von beiden Enden her die Schienen über die Verdickungen geschoben und so über dem Klemmbügel angeordnet, daß die Trennstelle zwischen den Schienen vom Klemmbügel überbrückt wird. Hier können Schwierigkeiten beim Überschieben der Schienen über den Klemmbügel auftreten, da die Schienen einerseits die Randverdickungen eng umgreifen sollen, andererseits der Klemmbügel den Querschnitt der Randverdickungen vergrößert.

Der Erfindung liegt die Aufgabe zugrunde, die bekannte Anordnung dahingehend zu verbessern, daß die Schwierigkeiten beim Überschieben vermieden sind, daß die Installation eines Überbrückungsteiles für den Stoßbereich der Schienen vereinfacht ist und die Anordnung insgesamt kostengünstiger wird.

Diese Aufgabe wird durch die im Kennzeichen des Anspruchs 1 erfaßten Merkmale gelöst.

Durch die beiden S-förmigen Profile wird die Handhabung der Anordnung wesentlich vereinfacht. Die Profile können an die Randverdickung angelegt werden und mit den Fingern in Lage gehalten werden. Abschließend wird eine der Schienen über die Enden der Profile geschoben. Abschließend wird die zweite Schiene übergeschoben, bis sie Stoß an Stoß mit der ersten Schiene liegt. Die Schienen fixieren die Profile zwischen sich und den Randverdickungen.

Eine andere Möglichkeit der Montage besteht darin, daß zunächst eine Schiene in ihrer endgültigen Lage angeordnet wird und die Profile zwischen den Randverdickungen und der Schiene in etwa zur Hälfte eingeschobcn werden. Anschließend wird die zweite Schiene über die Randverdickungen und die Profile geschoben. Die Profile sind als sog. Rollprofile kostengünstig herstellbar.

Weitere vorteilhafte Ausgestaltungen der Erfindung sind in den Unteransprüchen erfaßt.

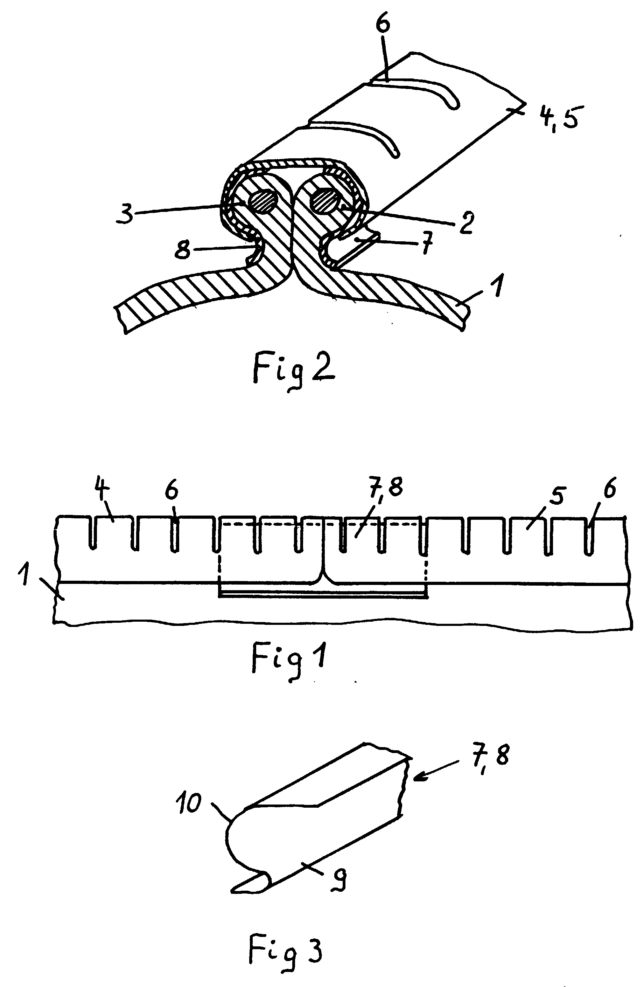

Die Erfindung ist anhand der in den Figuren 1 bis 3 schematisch dargestellten Ausführungsbeispiele näher erläutert.

In der Figur 1 ist eine seitliche Ansicht eines Ausschnittes einer Anordnung zur Umhüllung eines Substrates dargestellt. Eine Manschette 1 aus einem wärmeschrumpfbaren Kunststoff weist verdickte Randbereiche 2 und 3 auf, über welche von jedem Ende der Manschette 1 eine Schiene 4 und 5 geschoben ist. Die Schienen 4 und 5 weisen Schlitze 6 auf, die eine bessere Biegbarkeit der Schienen 4 und 5 sicherstellen sollen. Im Bereich der Stoßstelle der Schienen 4 und 5 sind unterhalb der Schienen 4 und 5 zwei S-förmige Profile 7 und 8 vorgesehen, die sich beiderseits der Stoßstelle erstrecken und dabei die Stoßstelle der Schienen 4 und 5 überbrücken. Die Profile 7 und 8 bestehen aus rostfreiem Stahl und sind der Kontur der Manschette 1 im Bereich von deren Längskanten angepaßt.

Die Figur 2 zeigt einen Schnitt durch den Längskantenbereich der Manschette 1. Es ist deutlich zu erkennen, daß die Profile 7 und 8 eng an der Manschette 1 anliegen, wobei ein Bereich der Profile 7 bzw. 8 die Randverdickung 2 bzw. 3 umgreift, wogegen ein anderer Bereich der Profile 7 bzw. 8 an der Außenfläche der Manschette 1 anliegt. Um eine Beschädigung der Manschette 1 beim Schrumpfen zu verhindern, ist der Kantenbereich der Profile 7 bzw. 8 nach außen umgebogen.

Die Figur 3 zeigt eine Ansicht eines Profiles 7 bzw. 8. Jedes Profil 7 bzw. 8 weist einen ersten Bereich 9 auf, der einen kleineren Krümmungsradius aufweist als der zweite Bereich 10.

Die Krümmungsradien der Bereiche 9 und 10 sind so zu bemessen, daß sie den Krümmungsradien der entsprechenden Bereiche der Schienen 4 bzw. 5 annähernd entsprechen.

Die Profile 7 bzw. 8 sind aus Bandmaterial durch Rollverformen hergestellt. Dabei wird von einem Band aus rostfreiem Stahl mit einer Wanddicke von ca. 0,2 mm ausgegangen. Nach der Rollverformung werden Längen von ca. 50 mm abgetrennt.

## Patentansprüche

1. Anordnung zum dichten Umschließen eines Substrates mit einer längsgeteilten Manschette (1) aus wärmeschrumpfendem Kunststoff, welche an ihren Längskanten verdickte Randabschnitte (2, 3) aufweist, über die zwei oder mehr die Längskanten zusammenhaltende Schienen (4, 5) unter Bildung einer Stoßstelle endweise geschoben sind, dadurch gekennzeichnet, daß im Bereich der Stoßstelle der Schienen (4, 5) beiderseits der verdickten Randabschnitte (2, 3) ein separates S-Profil (6, 7) an jedem der letzteren anliegt, wobei die von den Schienen (4, 5) umgriffenen und deren Stoßstellen überbrückenden S-Profile (7, 8) paarweise einander gegenüberliegend angeordnet sind.

2. Anordnung nach Anspruch 1, dadurch gekennzeichnet, daß das S-Profil (7, 8) einen ersten Bereich (9) mit einem kleinen Krümmungsradius und einen mit entgegengerichteter Krümmung verlaufenden zweiten Bereich (10) mit einem größeren Krümmungsradius aufweist.

3. Anordnung nach Anspruch 2, dadurch gekennzeichnet, daß der Krümmungsradius des ersten Bereiches (9) so ausgebildet ist, daß der erste Bereich (9) vor, während und nach dem Wärmeschrumpfen an den Randbereichen anliegt.

4. Anordnung nach Anspruch 2 oder 3, dadurch gekennzeichnet, daß der Krümmungsradius des zweiten Bereiches (10) nahezu gleich dem Krümmungsradius des Bereiches der Schiene (4, 5) ist, welcher an dem zweiten Bereich (10) anliegt.

5. Anordnung nach einem der Ansprüche 1 bis 4, dadurch gekennzeichnet, daß die S-Profile (7, 8) aus rostfreiem Stahl bestehen.

6. Anordnung nach einem der Ansprüche 1 bis 5, dadurch gekennzeichnet, daß sich an den zweiten gekrümmten Bereich (10) des S-Profiles (7, 8) ein gerade verlaufender dritter Bereich anschließt.

## Claims

1. Arrangement for the tight enclosure of a substrate with a longitudinally divided sleeve (1) which is made of heat-shrinking plastics material and which has at its longitudinal edges thickened peripheral segments (2,3) over which two or more rails (4,5) which hold the longitudinal edges together are pushed endwise to form a abutment, characterized in that, on both sides of the thickened peripheral segments (2, 3), a separate S-profiled section (7,8) is up against each of the latter in the region of their abutment of the rails (4,5), the S-profiled sections (7,8) embraced by the rails (4, 5) and bridging the abutments are disposed in pairs opposite one another.

2. Arrangement according to Claim 1, characterized in that the S-profiled section (7, 8) has a first region (9) having a small radius of curvature and a second region (10) which extends with oppositely directed curvature and has a greater radius of curvature.

3. Arrangement according to Claim 2, characterized in that the radius of curvature of the first region (9) is so designed that the first region (9) is up against the peripheral regions before, during and after the heat shrinkage.

4. Arrangement according to Claim 2 or 3, characterized in that the radius of curvature of the second region (10) is almost equal to the radius of curvature of the region of the rail (4, 5) which is up against the second region (10).

5. Arrangement according to one of Claims 1 to 4, characterized in that the S-profiled sections (7, 8) are composed of stainless steel.

6. Arrangement according to one of Claims 1 to 5, characterized in that a rectilinearly extending third region adjoins the second curved region (10) of the S-profiled section (7, 8).

## Revendications

1. Dispositif d'assemblage servant à envelopper un substrat de façon étanche par l'intermédiaire d'une manchette (1) possédant une ouverture longitudinale et composée d'une matière synthétique à thermorétrécissement, les bords ouverts longitudinaux de la manchette présentent des bourrelets (2, 3) sur lesquels on enfile deux ou plusieurs agrafes (4, 5) destinées à pincer les bourrelets et formant une ligne de jointure, ce dispositif étant caractérisé par le fait que dans la zone de la ligne de jointure des agrafes (4, 5) on introduit de chaque côté des bords bourrelés un profil en S (7, 8), ces profils en S (7, 8) sont pressés contre les bourrelets par les agrafes (4, 5) et chevauchent la ligne de jointure de ces dernières, les profils en S (7, 8) étant placés en opposition par paires.

2. Dispositif d'assemblage suivant la revendication de brevet 1, et caractérisé par le fait que le profil en S (7, 8) est composé d'une première partie (9) possédant un petit rayon de courbure et d'une deuxième partie (10) courbée dans le sens opposée et possédant un grand rayon de courbure.

3. Dispositif d'assemblage suivant la revendication de brevet 2, et caractérisé par le fait que le rayon de courbure de la première partie (9) est réalisé de telle façon qu'il reste positionné contre le bord de la manchette (1) avant, pendant et après la phase de thermorétrécissement.

4. Dispositif d'assemblage suivant la revendication de brevet 2 ou 3, et caractérisé par le fait que le rayon de courbure de la deuxième partie (10) possède un rayon de courbure presque identique à celui de la face interne de l'agrafe (4, 5) où la deuxième partie (10) repose.

5. Dispositif d'assemblage suivant une des revendications de brevet 1 à 4, et caractérisé par le fait que les profils en S (7, 8) sont fabriqués en acier inoxydable.

6. Dispositif d'assemblage suivant une des revendications de brevet 1 à 5, et caractérisé par le fait que la deuxième partie (10) du profil en S (7) est prolongée par une troisième partie droite.
